# EUROPÄISCHE PATENTANMELDUNG

(11) **EP 1 912 046 A1**
(43) Veröffentlichungstag der Anmeldung: **16.04.2008**
(21) Anmeldenummer: 06122079.4
(22) Anmeldetag: 11.10.2006
(51) Int. Cl.: G01G 19/00, G01N 5/02

(54) **Messgerät zur gravimetrischen Feuchtigkeitsbestimmung**

(71) Anmelder: Mettler-Toledo AG, 8606 Greifensee (CH)
(72) Erfinder: Lüchinger, Paul, 8610, Uster (CH)

(57) **Zusammenfassung**

Ein Messgerät (1) zur gravimetrischen Feuchtigkeitsbestimmung umfasst einen von einem Gehäuse (2) umgebenen Messraum (3), eine Heizvorrichtung (4), einen Probenbehälter (9) zum Aufnehmen von Probenmaterial und eine Waage (18). Mit der Waage (18) wird das Gewicht des Probenbehälters (9) mit dem Probenmaterial im Messraum (3) erfasst. Zum Erfassen der Temperatur ist mindestens ein Infrarot-Temperatursensor (11) eingesetzt, dessen Eintrittsöffnung (12) direkt unterhalb einer unteren Aussenfläche des im Messraum (3) befindlichen Probenbehälters (9) angeordnet ist. Es gelangt im Wesentlichen nur Infrarot-Strahlung von der Aussenfläche des Probenbehälters (9) in den Infrarot-Temperatursensor. Diese Temperaturmessung erlaubt ein einfaches Erfassen einer äusserst genauen Proben-Temperatur.

## Beschreibung

Die vorliegende Erfindung bezieht sich auf ein Messgerät zur gravimetrischen Feuchtigkeitsbestimmung.

Zur Bestimmung des Feuchtigkeitsgehaltes einer Probe wird diese getrocknet und das Gewicht vor und nach dem Trocknungsvorgang bestimmt. Gegebenenfalls wird der Gewichtsverlust auch während des Trocknungsvorganges gemessen. Dabei nimmt bei einer bekannten Probe in Abhängigkeit der Temperatur, der Trocknungszeit und den Prüfraumbedingungen deren Gewichtswert ab. Die Gewicht-Zeit-Kurve nähert sich asymptotisch dem Trockengewicht der Probe an. Die Kurve wird für die jeweilige Probe durch Messungen ermittelt und kann in einer Näherungsformel mathematisch ausgedrückt werden.

EP 0 611 956 B1 beschreibt ein Gerät, bei dem die Beschickung der Waagschale ausserhalb des Messgerätes erfolgt. Dazu wird die Waage auf einem schubladenförmigen Auszug aus dem Messgerätgehäuse herausgefahren. Die Waagschale ist als schalenförmiger Probenbehälter ausgebildet. Als Strahlungsquelle wird eine ringförmige Halogenlampe eingesetzt, welche im Betriebszustand oberhalb der Probeaufnahme angeordnet ist. In anderen Geräten wird als Heizelement auch eine Heizfläche oder ein Infrarotstrahler über der Probenaufnahme angeordnet.

Als Strahlungsquelle kann gemäss der US 6,521,876 B1 auch ein Mikrowellengenerator verwendet werden. Ein Nachteil bei der Erwärmung durch Mikrowellen besteht darin, dass Proben mit inhomogener Feuchtigkeitsverteilung auch inhomogen erwärmt werden. Die aus den erwärmten Stellen der Probe entweichenden flüchtigen Komponenten, insbesondere Feuchtigkeit in Form von Wasserdampf kann an den kalten Stellen der Probe teilweise kondensieren, so dass in der Tendenz zuerst eine Verteilung der Feuchtigkeit innerhalb der Probe stattfindet, bevor sie aus dieser ausgetrieben wird. Die dadurch entstehenden Zeitfehler limitieren die Genauigkeit bei der Auswertung.

Aufgrund der zur Verfügung stehenden elektronischen Mittel kann ein entsprechend ausgerüstetes Messgerät zur gravimetrischen Feuchtigkeitsbestimmung den Feuchtigkeitsgehalt einer Probe anhand der gemessen Kurvenparameter und der Trocknungszeit errechnen und auf einer Anzeigeeinheit anzeigen. Durch diese Methode muss das zu trocknende Gut nicht mehr vollständig durchgetrocknet sein, es genügt die Ermittlung der Koordinaten zweier Erfassungspunkte im Gewicht-Zeitdiagramm.

Das Gewicht einer Probe verändert sich im Wesentlichen in Abhängigkeit von der Temperatur, der Trocknungszeit und den Prüfraumbedingungen. Bei den bekannten Geräten wird die Temperatur mit einem Temperatursensor im Prüfraum über der Probe erfasst. Aufgrund von konvektiven Prozessen ist die Temperaturverteilung über der Probe nicht homogen. Die erfassten Temperaturen stimmen nicht genügend genau mit der Temperatur der Probe überein. Wenn nun der Kurvenverlauf aus Messpunkten ermittelt wird, bei denen die erfasst Temperatur nicht mit der wirklichen Temperatur der Probe übereinstimmt, so werden fehlerhafte Feuchtigkeitsgehalte ermittelt.

DE 10 2005 000 805 A1 beschreibt ein Wägesystem mit Probenwechsler, bei dem seitlich neben dem Probenwechsler ein Infrarot-Temperatursensor angeordnet ist. Der Sensor soll die Temperatur der seitlichen Wand eines Probenbehälters bzw. Tiegels erfassen. Wenn nun im Gehäuse des Probenwechslers auch ein Heizelement, eingesetzt wird, so erzeugt dieses Heizelement im Gehäuse ein Strahlungsfeld, das die Messung des Infrarot-Temperatursensors beeinträchtigt. Die ermittelte Temperatur entspricht nicht mehr der Temperatur des Probenbehälters, weil ein Teil der erfassten Infrarotstrahlung vom Heizelement stammt. Anteile der Heizstrahlung können dabei über Reflektionen am Gehäuse und/oder am Probenwechsler und/oder an der seitlichen Wand des Probenbehälters in den Infrarot-Temperatursensor gelangen.

Der Erfindung liegt nun die Aufgabe zugrunde, eine einfache Lösung zum Erfassen einer möglichst genauen Proben-Temperatur zu finden.

Diese Aufgabe wird durch die Merkmale des Anspruches 1 gelöst. Die abhängigen Ansprüche beschreiben vorteilhafte Ausführungsvarianten.

Im Rahmen der vorliegenden Erfindung wurde erkannt, dass zur genauen Temperaturbestimmung mindestens ein Infrarot-Temperatursensor einzusetzen ist, dessen Eintrittsöffnung direkt unterhalb des Probenbehälters angeordnet ist. Die zentrale Achse des erfassbaren Raumbereiches des Sensors steht vorzugsweise im Wesentlichen senkrecht zur Aussenfläche des Probenbehälters beim Sensor. Durch diese Anordnung wird das Eintreten von unerwünschter Infrarotstrahlung in den Infrarot-Temperatursensor weitgehend verhindert. Es gelangt im Wesentlichen nur Infrarotstrahlung von der Aussenfläche des Probenbehälters beim Sensor in den Infrarot-Temperatursensor. Diese Temperaturmessung ist auch nicht von konvektiven Prozessen beeinträchtigt und erlaubt somit ein einfaches Erfassen einer möglichst genauen Proben-Temperatur.

Der Probenbehälter ist vorzugsweise als nach oben offene Schale ausgebildet. Ein Halter, welcher den Probenbehälter hält und mit einer Gewichtsaufnahme der Waage verbunden ist, lässt den Boden des Probenbehälters zumindest beim Infrarot-Temperatursensor frei. Der Halter umfasst vorzugsweise einen Ring, auf den ein äusserer Rand der Wand des Probenbehälters aufgelegt wird. Gegebenenfalls besteht die Auflagefläche nur aus Ringabschnitten. Ein Verbindungselement des Halters führt radial vom Ring weg und umfasst eine Verbindungseinrichtung zum Verbinden des Halters mit der Gewichtsaufnahme der Waage.

Weil die in den Infrarot-Temperatursensor eintretende Strahlung von der Bodenfläche des Probenbehälters stammt, stimmt die daraus ermittelte Temperatur gut mit der Temperatur im darüber liegenden Probenmaterial überein. Erst im seitlichen Wandbereich des Probenbehälters müssen relevante Abweichungen von der Temperatur des Probenmaterials erwartet werden. Durch die gezielte Anordnung und insbesondere Ausrichtung des Infrarot-Temperatursensors können Abweichungen von der Temperatur des Probenmaterials im Wesentlichen vermieden werden. Bei Änderungen der Temperatur hinkt die Probentemperatur etwas der Temperatur des Probenbehälters nach. Es versteht sich daher von selbst, dass die Temperatur der Bodenfläche des Probenbehälters nicht schnell geändert werden darf.

Die Intensität der Infrarot-Strahlung im Frequenzbereich, in dem der Infrarotsensor empfindlich ist, hängt von der Temperatur der Aussenfläche des Probenbehälters ab. Für einen schwarzen Körper gilt das Plancksche Gesetz. Wenn die Aussenfläche des Probenbehälters zumindest beim Infrarot-Temperatursenor eine äusserst kleine Infrarot-Reflektion aufweist, so gleicht die Strahlung des Probenbehälters beim Infrarot-Temperatursenor der Strahlung eines schwarzen Körpers. Dies kann beispielsweise mittels einer entsprechenden Beschichtung erzielt werden.

Damit die Temperatur beim Infrarot-Temperatursenor im Wesentlichen der Temperatur des Probenbehälters und der Temperatur der Probe entspricht, wird der Probenbehälter aus einem Material mit hoher Wärmeleitfähigkeit hergestellt, vorzugsweise aus Metall. Es hat sich gezeigt, dass ein Probenbehälter aus Aluminium zu einer genügend gleichmässigen Temperaturverteilung im Probenbehälter führt. Weil Infrarot von glatten Aluminiumoberflächen unerwünscht stark reflektiert würde, wird der Probenhalter an seiner Unterseite vorzugsweise beschichtet. Um die Gleichmässigkeit der Temperaturverteilung zu überprüfen, wird gegebenenfalls mindestens ein weiterer Infrarot-Temperatursensor einer anderen Stelle des Probenbehälter-Bodens zugeordnet. Gegebenenfalls ist im Messraum, insbesondere über der Probe, mindestens ein Temperatursensor vorgesehen, der nicht als Infrarotsensor ausgebildet ist. Dadurch können unerwünscht grosse Temperaturunterschiede im Messraum erfasst werden.

Damit das Produkt und der Probenbehälter im Wesentlichen die gleiche konstante Temperatur aufweisen, sollte auch die Art der Zuführung der Wärmeenergie optimiert werden. Es hat sich gezeigt, dass eine Wärmezuführung von unten und von oben besonders gute Resultate erzielt. In einem bevorzugten Ausführungsbeispiel wird über und unter dem Probenbehälter je eine Heizfläche angeordnet. In der unteren Heizfläche ist eine Durchtrittsöffnung für den Infrarot-Temperatursensor ausgebildet.

Der Infrarot-Temperatursensor umfasst eine Eintrittsöffnung, gegebenenfalls ein optisches Element zum Beeinflussen der eintretenden Strahlung und mindestens ein photoelektrisches Sensorelement, das ein der Infrarot-Intensität entsprechendes elektrisches Signal erzeugt. Das mindestens eine Sensorelement ist beispielsweise eine IR-Fotodiode. Vorzugsweise wird ein handelsübliches InfrarotThermometer verwendet, so dass ein Ausgangssignal im Wesentlichen direkt als Temperaturwert verwendet werden kann. Gegebenenfalls wird für die verwendeten Probenbehälter eine spezielle Eichung durchgeführt.

Um das mindestens eine Sensorelement und eine Steuereinheit des Thermometers etwas von der Eintrittsöffnung entfernt anordnen zu können, wird gegebenenfalls zwischen der Eintrittsöffnung und dem Sensorelement ein optischer Weg ausgebildet, der beispielsweise einen Lichtleiter bzw. Infrarotleiter oder optische Elemente, wie Linsen und Spiegel, umfasst.

Das Messgerät umfasst vorzugsweise einen Prüfraum, der von einem Gehäuse im Wesentlichen umgeben ist. Im Prüfraum befinden sich zumindest eine Heizeinrichtung und die Eintrittsöffnung des Infrarot-Temperatursensors. Für eine Messung gelangt der Probenbehälter mit dem Probenmaterial in den Messraum. Das Gewicht des Probenbehälters mit der Probe wird über den Halter auf die Gewichtsaufnahme der Waage übertragen. Zum Bereitstellen und Entnehmen einer Probe ist beispielsweise zumindest der Halter relativ zum Messraum bewegbar. Vorzugsweise ist zwischen der Waage und dem Gehäuse des Messraumes eine Führungsvorrichtung angeordnet, so dass der Probenbehälter auf dem Halter in und aus dem Messraum bewegt werden kann. Gegebenenfalls ist aber lediglich ein Teil des Gehäuses des Messraumes bewegbar, so dass der Probenbehälter von aussen zugänglich wird.

Entsprechend der jeweiligen geometrischen Gestaltung des Halters und der Lastaufnahme umfasst die Lastaufnahme mindestens ein Kalibriergewicht. Die Auflage des mindestens einen Kalibriergewichtes kann durch den Benutzer und/oder durch eine Kalibriervorrichtung betätigt werden.

Um eine Kennung einer aktuellen Probe erfassbar zu machen, wird der Probe ein Probenbehälter mit dieser Kennung zugeordnet. Die Kennung ist beispielsweise als Code, insbesondere als Strichcode, als Matrixcode oder als im Radiofrequenzbereich (RF)arbeitendes Erkennungselement - auch als RF-ID-Tag bekannt- am Probenbehälter ausgebildet. Eine Strichcode-Leseeinrichtung ist so angeordnet, dass der Strichcode vor oder beim Einführen des Probenbehälters in den Messraum eingelesen wird. Bei einer Anordnung, bei der die Waage relativ zum Messraum bewegt wird, kann die Leseeinrichtung beispielsweise an der Waage angeordnet sein, wobei das Ablesen nur dann möglich ist, wenn der Probenbehälter nicht im Messraum ist.

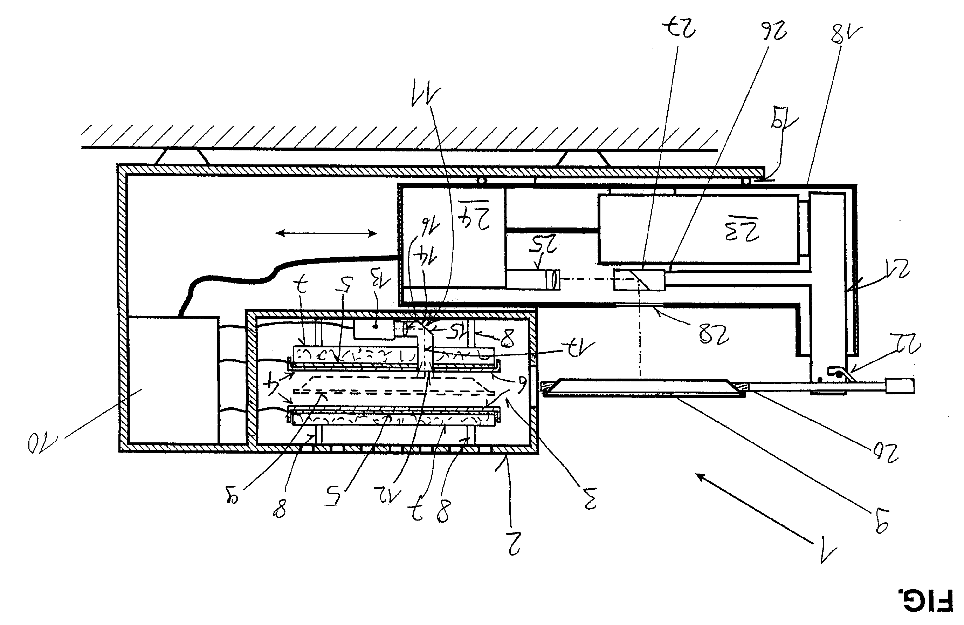

Die Zeichnung erläutert die Erfindung anhand eines Ausführungsbeispieles. Dabei zeigt die Figur einen Vertikalschnitt durch ein Messgerät 1 zur gravimetrischen Feuchtigkeitsbestimmung. Ein Probenbehälter ist ausserhalb (ausgezogene Linien) und im Messraum (unterbrochene Striche) dargestellt.

Das Messgerät 1 umfasst einen zumindest teilweise von einem Gehäuse 2 umgebenen Messraum 3. Mit einer Heizvorrichtung 4 kann im Messraum 3 eine gewünschte Temperatur eingestellt werden. Die Heizvorrichtung 4 umfasst mindestens ein aus dem Stande der Technik bekanntes Heizelement. In der dargestellten Ausführungsform sind zwei Heizelemente eingesetzt, die je eine elektrische Heizfolie 5 und eine daran anschliessende Heizplatte 6 umfassen. Die in den Heizfolien 5 erzeugte Wärme wird gleichmässig verteilt von den Heizplatten 6 oberhalb und unterhalb eines Bereiches zur Aufnahme eines Probenbehälters 9 gegen den Probenbehälter 9 hin abgestrahlt.

Auf den von den Heizplatten 6 abgewandten Seiten der Heizfolien 5 ist je ein Isolierelement 7 angeordnet. Die Isolierelemente 7 zusammen mit den Heizfolien 5 und den Heizplatten 6 sind über Verbindungselemente 8 am Gehäuse 2 befestigt. Es versteht sich von selbst, dass gegebenenfalls auch lediglich ein Heizelement vorgesehen werden kann. Zum Erzeugen einer besonders gleichmässigen Temperaturverteilung ist es aber zweckmässig, Wärme von unten und von oben zuzuführen. Zur Speisung der Heizfolien 5 ist eine Heizsteuerung 10 eingesetzt.

Mit mindestens einem Temperatursensor wird das Erreichen, bzw. das Halten, einer gewünschten Temperatur kontrolliert. Zum Erfassen einer Temperatur, die der Temperatur des Probebehälters 9 entspricht, ist mindestens ein Infrarot-Temperatursensor 11 eingesetzt, der eine Eintrittsöffnung 12 direkt unterhalb einer unteren Aussenfläche des Probenbehälters 9 aufweist. Der Infrarot-Temperatursensor 11 umfasst mindestens ein photoelektrisches Sensorelement 13, vorzugsweise eine IR-Fotodiode. Von der Eintrittsöffnung 12 führt ein Strahlungsweg 14 zum photoelektrischen Sensorelement 13. Das Sensorelement 13 soll vorzugsweise auch die zum Messen nötige Steuereinheit umfassen.

In der dargestellten Ausführungsform ist das photoelektrische Sensorelement 13 thermisch teilweise durch die Isolierelemente 7 vom Probenbehälter 9 getrennt. Durch die Eintrittsöffnung 12 gelangt der Infrarotanteil der Strahlung entlang des Strahlungsweges 14 durch das Isolierelement 7. Der dargestellte Strahlungsweg 14 umfasst einen Umlenkspiegel 15 und gegebenenfalls eine Optik 16. Eine Achse 17 des Infrarot-Temperatursensors 11, welche dem Zentrum des erfassbaren Raumbereiches entspricht, steht im Wesentlichen senkrecht zur unteren Aussenfläche des Probenbehälters 9 beim Infrarot-Temperatursensor 11.

Auf dem Probenbehälter 9 befindet sich Probenmaterial, das im Messraum 3 getrocknet wird. Um während des Trocknungsvorganges die Gewichtsabnahme erfassen zu können, wird eine Waage 18 eingesetzt. In der dargestellten Ausführungsform ist zwischen der Waage 18 und dem Gehäuse 2 des Messraumes 3 eine Führungsvorrichtung 19 angeordnet, so dass der Probenbehälter 9 in und aus dem Messraum 3 bewegbar ist.

Der Probenbehälter 9 ist über einen Halter 20 mit einer Gewichtsaufnahme 21 der Waage 18 verbunden. Der Halter 20 lässt den Boden des Probenbehälters 9 zumindest teilweise frei, so dass in der Messraumposition des Probenbehälters 9 an der Position der Eintrittsöffnung 12 des Infrarot-Temperatursensors keine störenden Teile des Halters 20 vorhanden sind. Der dargestellte Halter 20 umfasst einen Ring, auf den ein äusserer Randbereich des Probenbehälters 9 aufgelegt wird, und ein Verbindungselement, das radial vom Ring weg führt. Das Verbindungselement wird über eine Eingriffsanordung 22 mit der Gewichtsaufnahme 21 verbunden. Die Waage 18 umfasst eine Messeinheit 23 und eine damit verbundene Waagen-Steuerung 24.

Eine Strichcode-Leseeinrichtung 25 ist an der Waage 18 so angeordnet, dass ein Strichcode an der Unterseite des Probenbehälters 9 vor oder beim Einführen des Probenbehälters 9 in den Messraum 3 einlesbar ist. Die optische Verbindung zwischen dem Strichcode und der Leseeinrichtung 25 erfolgt beispielsweise über einen an einem Träger 26 der Lastaufnahme 21 befestigten Umlenkspiegel 27 und durch eine Durchtrittsöffnung 28. Die Leseeinrichtung 25 ist mit der Waagen-Steuerung 24 verbunden.

Zur Durchführung von Messungen ist die Heizsteuerung 10 mit der Waagen-Steuerung 24 und einer nicht dargestellten Ein- und Ausgabe-Einrichtung verbunden.

## Patentansprüche

1. Messgerät (1) zur gravimetrischen Feuchtigkeitsbestimmung mit einem zumindest teilweise von einem Gehäuse (2) umgebenen Messraum (3), mit einer Heizvorrichtung (4), mit mindestens einem Temperatursensor, mit einem Probenbehälter (9) zum Aufnehmen von Probenmaterial und mit einer Waage (18), wobei die Waage (18) das Gewicht des Probenbehälter (9) mit dem Probenmaterial im Messraum (3) erfassbar macht, **dadurch gekennzeichnet, dass** der mindestens eine Temperatursensor ein Infrarot-Temperatursensor (11) ist, der eine der Erfassung von Infrarotstrahlung dienende Eintrittsöffnung (12) aufweist, welche Eintrittsöffnung (12) direkt unterhalb einer unteren Aussenfläche des im Messraum (3) befindlichen Probenbehälters (9) angeordnet ist.

2. Messgerät (1) nach Anspruch 1, **dadurch gekennzeichnet, dass** die Eintrittsöffnung (12) einen erfassbaren Raumbereich des Infrarot-Temperatursensors (11) definiert, wobei eine Achse (17) im Zentrum des erfassbaren Raumbereiches im Wesentlichen senkrecht zur unteren Aussenfläche des Probenbehälters (9) bei der Eintrittsöffnung (12) des Infrarot-Temperatursensors (11) steht.

3. Messgerät (1) nach Anspruch 1 oder 2, **dadurch gekennzeichnet, dass** der Infrarot-Temperatursensor (11) mindestens ein photoelektrisches Sensorelement (13), vorzugsweise eine IR-Fotodiode, umfasst und von der Eintrittsöffnung (12) ein Strahlungsweg (14) zum photoelektrischen Sensorelement (13) führt.

4. Messgerät (1) nach Anspruch 3, **dadurch gekennzeichnet, dass** das photoelektrische Sensorelement (13) eine Steuereinheit aufweist, wobei das photoelektrische Sensorelement (13) und dessen Steuereinheit thermisch zumindest teilweise durch eine Isolierung (7) vom Probenbehälter (9) abgetrennt sind.

5. Messgerät (1) nach einem der Ansprüche 1 bis 4, **dadurch gekennzeichnet, dass** die Aussenfläche des Probenbehälters (9) zumindest bei der Eintrittsöffnung (12) des Infrarot-Temperatursensors (11) eine im Wesentlichen verschwindende Infrarot-Reflektion und dazu vorzugsweise eine Beschichtung aufweist.

6. Messgerät (1) nach einem der Ansprüche 1 bis 5, **dadurch gekennzeichnet, dass** der Probenbehälter (9) ein Material mit hoher Wärmeleitfähigkeit, vorzugsweise Metall, insbesondere Aluminium, umfasst.

7. Messgerät (1) nach einem der Ansprüche 1 bis 6, **dadurch gekennzeichnet, dass** der Probenbehälter (9) über einen Halter (20) mit einer Gewichtsaufnahme (21) der Waage (18) verbunden ist, wobei der Halter (20) den Boden des Probenbehälters (9) zumindest bei der Eintrittsöffnung (12) des Infrarot-Temperatursensors (11) freilässt.

8. Messgerät (1) nach Anspruch 7, **dadurch gekennzeichnet, dass** der Halter einen Ring umfasst, welcher als Ganzes oder abschnittsweise als Auflagefläche für einen äusseren Randbereich des Probenbehälters (9) dient, und dass ein radial vom Ring weg führendes Verbindungselement mit der Gewichtsaufnahme (21) der Waage (18) verbindbar ist.

9. Messgerät (1) nach einem der Ansprüche 1 bis 8, **dadurch gekennzeichnet, dass** die Heizvorrichtung (4) über und unter dem Probenbehälter (9) je eine Heizfläche umfasst, wobei in der unteren Heizfläche eine Durchtrittsöffnung für den Infrarot-Temperatursensor (11) ausgebildet ist.

10. Messgerät (1) nach einem der Ansprüche 1 bis 9, **dadurch gekennzeichnet, dass** zumindest der Probenbehälter (9) relativ zum Messraum (3) bewegbar ist, wobei vorzugsweise zwischen der Waage (18) und dem Gehäuse (2) des Messraumes (3) eine Führungsvorrichtung (19) angeordnet ist, so dass der Probenbehälter (9) in und aus dem Messraum (3) bewegbar ist.

11. Messgerät (1) nach einem der Ansprüche 1 bis 10, **dadurch gekennzeichnet, dass** ein Code, insbesondere eine Strichcode, ein Matrixcode oder ein RF-Erkennungselement, am Probenbehälter (9) angeordnet ist und dass eine Code-Leseeinrichtung (25) derart angeordnet ist, dass ein Code vor oder beim Einführen des Probenbehälters (9) in den Messraum (3) einlesbar ist.

12. Messgerät (1) nach einem der Ansprüche 1 bis 11, **dadurch gekennzeichnet, dass** für das Beschicken des Messraums (3) mit einem Probenbehälter (9) die Waage relativ zum Messraum (3) beweglich ist, dass ein Code, insbesondere ein Strichcode ein Matrixcode oder ein RF-Erkennungselement am Probenbehälter (9) angeordnet ist, und dass eine Code- Leseeinrichtung (25) vorzugsweise an der Waage (18) angeordnet ist und das Ablesen nur dann möglich ist, wenn sich der Probenbehälter (9) nicht im Messraum (3) befindet.
